Europäisches Patentamt

European Patent Office

Office européen des brevets

(19)

(11) Veröffentlichungsnummer: **0 169 934**
**A1**

(12) # EUROPÄISCHE PATENTANMELDUNG

(21) Anmeldenummer: **84112461.3**

(22) Anmeldetag: **16.10.84**

(51) Int. Cl.⁴: **G 01 P 9/02**
**G 01 C 19/04, G 01 C 19/42**

(30) Priorität: **02.07.84 DE 3424301**

(43) Veröffentlichungstag der Anmeldung:
**05.02.86 Patentblatt 86/6**

(84) Benannte Vertragsstaaten:
**FR GB IT SE**

(71) Anmelder: **LITEF Litton Techn. Werke der HELLIGE GmbH**
**Lörracher Strasse 18**
**D-7800 Freiburg/Br.(DE)**

(72) Erfinder: **Handrich, Eberhard, Dr. Dipl.-Phys.**
**Keltenring 104**
**D-7815 Kirchzarten(DE)**

(72) Erfinder: **Ryrko, Bruno, Dipl.-Ing.**
**Jahnstrasse 10**
**D-7809 Denzlingen(DE)**

(74) Vertreter: **Patentanwälte TER MEER - MÜLLER - STEINMEISTER**
**Mauerkircherstrasse 45**
**D-8000 München 80(DE)**

(54) **Vorrichtung zur Drehratenmessung.**

(57) Die Vorrichtung zur Drehratenmessung sieht die Verwendung eines trockenen torquerlosen Kreisels mit einer zusätzlichen Dämpfung (1, 2, 4) vor, die als elektromagnetische Wirbelstromdämpfung, als Gasreibungsdämpfung, viskose Reibung oder auch als Materialdämpfung verwirklicht sein kann. Die Vorrichtung wirkt im Prinzip wie ein trockener Wendekreisel. Gegenüber einem trockenen Kreisel üblicher Bauart ergeben sich jedoch erhebliche konstruktive Vereinfachungen und Kosteneinsparungen, so daß sich die Drehratenmeßvorrichtung für Anwendungsbereiche eignet, bei denen der Einsatz einer Kreiselsteuerung zwar erwünscht, jedoch bisher wegen zu hohen technischen und finanziellen Aufwands nicht erwogen wurde.

./...

Croydon Printing Company Ltd.

FIG.1

## BESCHREIBUNG

Die Erfindung betrifft eine Vorrichtung zur Drehratenmessung nach dem Oberbegriff des Patentanspruchs 1.

Das Prinzip des sogenannten trockenen Kreisels ist bekannt: Das empfindliche Element, der Rotor, wird durch eine Achse angetrieben und ist derart an dieser Achse befestigt, daß er wie ein freier Kreisel wirkt. Das Prinzip der meisten bekannten Konstruktionen trockener Kreisel beruht darauf, daß der Rotor durch dynamische Abstimmung von der Antriebsachse entkoppelt wird. Bekannt ist auch die Entkopplung durch magnetische Felder oder mechanische Gegenfedern. Bei einer Drehrate bleibt dann der Rotor stehen und es baut sich ein Neigungswinkel zwischen Rotor und Kreiselgehäuse auf, das von einem Abgriff erfaßt wird. Bei den sogenannten Plattformanwendungen dient dieses Abgriffsignal zur Stabilisierung eines mechanischen Rahmensystems. Der Torquer des trockenen Kreisels, bestehend aus wenigstens einem Torquermagneten auf dem Rotor und gehäusefesten Spulen dient bei dieser Anwendung als Führungssystem für die zu stabilisierende Plattform, beispielsweise zum Horizontieren.

Bei den sogenannten Strapdown-Anwendungen wird das Abgriffsignal über einen Regler so auf den Torquer geschaltet, daß die Rotorauslenkung möglichst klein wird. Der Torquerstrom ist dann proportional zur Drehrate und bildet das Meßsignal.

0169934

In beiden genannten Fällen müssen je nach Genauigkeitsanforderungen die Störmomente möglichst klein gehalten werden. Störmomente treten auf beispielsweise durch Reibung (z. B. durch Gas) und durch die unvermeidliche Dämpfung (z. B. durch das Federmaterial oder durch eine elektromagnetische Dämpfung) des Rotors, die bei Verstimmung des Nullpunkts des Rotorabgriffs über eine Zeitkonstante zu einer Drift D führt:

$$D = \frac{1}{\tau} \cdot \alpha \qquad (1)$$

(D: Drift des Kreisels; $\tau$: Zeitkonstante des Kreisels; $\alpha$: Auslenkwinkel des Rotors)

Typische Zeitkonstanten von trockenen Kreiseln liegen zwischen 5 und 50 Sekunden.

Trockene Kreisel mit inertialer Genauigkeit verlangen eine relativ hohe Fertigungsgenauigkeit und einen hohen Aufwand an Mechanik und Elektronik im Bereich der Nachstellung und Regelung. Es gibt jedoch einen relativ hohen Bedarf an Kreiselanwendungen, bei denen eine verringerte Genauigkeit ausreichend ist. In vielen dieser Anwendungsbereiche konnte sich die erläuterte Gattung von Kreiseln aus Kostengründen nicht oder nur teilweise durchsetzen.

Der Erfindung liegt damit die Aufgabe zugrunde, eine Vorrichtung zur Drehratenmessung mittels eines Kreisels zu schaffen, die sich für einen weiten Anwendungsbereich eignet, jedoch bei deutlich geringerem Aufwand an Mechanik und Elektronik wesentlich preisgünstiger herstellen läßt.

Die Erfindung ist bei einer Vorrichtung der eingangs genannten Art zur Drehratenmessung durch die im Kennzeichen des Anspruchs 1 angegebenen Merkmale gekennzeichnet.

0169934

Vorteilhafte Weiterbildungen des Erfindungsgedankens sind in den Unteransprüchen angegeben und außerdem in der nachfolgenden Beschreibung von Ausführungsbeispielen erläutert.

Der Grundgedanke der Erfindung geht dahin, einen bekannten trockenen Kreisel zu einem zweiachsigen Wendekreisel, der auch als "trockener Wendekreisel" bezeichnet werden könnte, umzukonstruieren und dadurch die Mechanik und die Elektronik des Kreisels so zu vereinfachen, daß ein zum herkömmlichen Wendekreisel in Funktion und Meßgenauigkeit vergleichbares Instrument entsteht, das jedoch alle Vorteile eines trockenen Kreisels aufweist, vor allem die Zweiachsigkeit. Der Kerngedanke der Erfindung ist es, im Gegensatz zu den bisher bekannten trockenen Kreiseln, die Dämpfung nicht zu verringern, sondern sie so zu erhöhen, daß ein Wendekreisel entsteht.

Bei diesem Prinzip wird sich der Rotor gegenüber seiner Referenzebene um einen Winkel anstellen, der von der Drehgeschwindigkeit des Gehäuses (Fahrzeug, Flugkörper) abhängt. Das Ausgangssignal des Winkelabgriffs am Rotor wird als Maß für die Drehgeschwindigkeit ausgelesen, d.h. die oben angegebene Gleichung (1) für das Dämpfungsstörmoment, wird zum Auslesen des Meßsignals benutzt.

Um bei in der Praxis auftretenden kleinen Auslenkungen des Rotors einen ausreichend großen Drehratenbereich zu erzielen, muß die Dämpfung so groß gewählt werden, daß die Zeitkonstante nur wenige Millisekunden beträgt.

Erfindungsgemäß können grundsätzlich unterschiedliche Möglichkeiten für die Dämpfung des Rotors um die Meßachsen benutzt werden.

(a) Bei einer <u>Dämpfung mit Antriebsbelastung</u> wird der Dämpfungsvektor ohne äußere Drehrate in die Richtung der Rotorachse weisen. Bei einer Drehrate lenkt der Rotor aus, bis die Komponente der Dämpfung, die in die Eingangsachse fällt, der Drehrate entspricht. Bei dieser Lösung jedoch muß der Motor die Grunddämpfung überwinden. Daher eignen sich für diesen Typ z.B. elektromagnetische Bremsen, bei denen das Magnetsystem gehäusefest ist und längs des Rotorumfangs wechselnde Polarität aufweist.

(b) Bei einer <u>Dämpfung ohne Antriebsbelastung</u> wirkt die Dämpfung durch ein rotorfestes radiales homogenes Magnetfeld oder durch ein beliebiges radiales Feld zwischen einem starr mit der Achse umlaufenden Rotor und dem empfindlichen Element (Meßelement) oder durch eine Gasdämpfung. Dabei sind ohne eine äußere Drehrate keine dämpfenden Kräfte vorhanden. Bei einer konstanten Drehgeschwindigkeit um eine der Eingangsdrehachsen des Instruments treten entsprechende Rotorwinkel auf.

Bei einer Dämpfung ohne Antriebsbelastung lassen sich folgende Fälle als Beispiele angeben:

1. Elektromagnetische Dämpfung durch
   - rotorfestes, radiales Feld und starr mit der Achse umlaufendes Dämpfungselement;
   - rotorfestes Dämpfungselement und starr mit der Achse umlaufendes radiales Feld;
   - gehäusfestes radiales und homogenes Feld und rotorfestes Dämpfungselement;
   - gehäusefestes Dämpfungselement und rotorfestes radiales und homogenes Feld.

2. Gasdämpfung bestehend aus einer Kammer und einem
Dämpfungsteil (Paddel) wobei sowohl die Kammer als
auch das Paddel jeweils mit dem Rotor oder dem Gehäuse
bzw. der Welle verbunden sein können. Es lassen sich
wiederum vier Lösungsfälle analog zur elektromagnetischen Dämpfung angeben. Im letztgenannten Fall ist
es vorteilhaft, eine rotationssymmetrische Anordnung
zu wählen, um die Belastung des Antriebs klein zu
halten.

Die Erfindung und vorteilhafte Einzelheiten werden
nachfolgend unter Bezug auf die Zeichnung in beispielsweisen Ausführungsformen näher erläutert. Es
zeigen:

Fig. 1 einen trockenen Wendekreisel mit elektromagnetischer Dämpfung gemäß der Erfindung;

Fig. 2 bis 7 verschiedene prinzipielle Beispiele für
eine konstruktive Gestaltung der zusätzlichen
Dämpfung eines trockenen Wendekreisels gemäß
der Erfindung; und

Fig. 8 ein Konstruktionsbeispiel für einen trockenen
Wendekreisel mit Gasdämpfung.

Einander funktionsmäßig entsprechende Baugruppen sind,
auch wenn die konstruktiven Gestaltungen im einzelnen
voneinander abweichen, mit den gleichen Bezugshinweisen
gekennzeichnet.

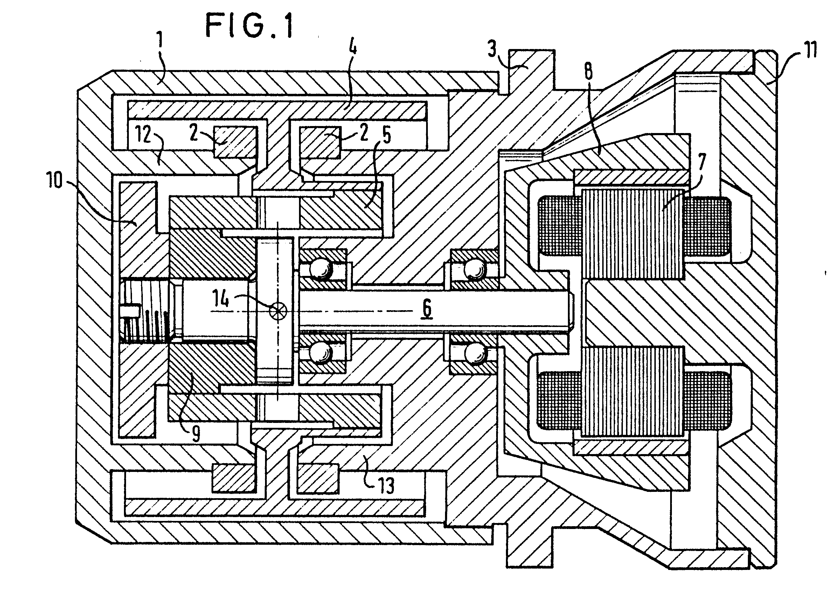

Die Schnittbilddarstellung der Fig. 1 zeigt ein erstes Ausführungsbeispiel eines dynamisch abgestimmten trockenen Wendekreisels mit elektromagnetischer Dämpfung gemäß der Erfindung. In einem rotationssymmetrischen Gehäuse 3 ist ein Motorrotor 8 (Außenläufer) mit einer Welle 6 durch zwei nicht näher bezeichnete Kugellager gelagert. Der Motorstator 7 ist durch einen gleichzeitig als Magnetjoch dienenden Deckel 11 gehalten. Am vom Stator 7 entfernten Ende ist ein Träger 9 für ein Federgelenk 5 auf die Welle 6 aufgesetzt, das durch eine Anschlagschraube 10 gehalten wird. Das Federgelenk 5 ist von bekannter Konstruktion und bedarf für den Fachmann keiner näheren Erläuterung. Mit dem Federgelenk 5 ist ein weiterer Rotor 4 verbunden, der über das Federgelenk 5 relativ zur Welle 6 um zwei Achsen um einen geringen Winkelbetrag verschwenkbar ist. Der Rotor 4 läuft im freien Ringraum eines weitgehend geschlossenen magnetischen Kreises, der gebildet ist durch aus zwei ringförmigen Permanentmagneten 2 und einer das Gehäuse nach außen abschließenden Haube 1 aus ferromagnetischem, vorzugsweise weichmagnetischem Material. Der eine der Permanentmagneten sitzt auf einem nach innen reichenden ringförmigen Ansatz 12 der Haube 1, während der im Bild der Fig. 1 näher zum Stator 7 liegende Permanentmagnet durch einen Ansatz 13 mit Schulter am Gehäuse 3 festgelegt ist. Wie dargestellt, liegen einander entsprechende Kreisebenen der runden Permanentmagneten 2 genau gleichabständig von einer zur Welle 6 senkrechten

Ebene durch den virtuellen Schwenkpunkt des wie eine kardanische Aufhängung wirkenden Federgelenks 5. Der magnetische Kreis der Permanentmagnete 2 wird geschlossen über den Ansatz 12, die Haube 1, das Gehäuse 3 und den ringförmigen Ansatz 13. Der am Federgelenk 5 aufgehängte Rotor 4 läuft im freien Ringraum zwischen den Permanentmagneten 2 bzw. zwischen den Permanentmagneten 2 und der Haube 1. Der Rotor 4 als empfindliches Element besteht aus einem elektrisch gut leitfähigen Material, beispielsweise aus Kupfer bzw. einer Kupferlegierung. Da die Dämpfung sich mit der Temperatur ändert, wird sich für eine bestimmte Drehrate der Ausschlagwinkel ändern. Diese Änderung muß, sofern der Schwenkwinkel des empfindlichen Elements als Ausgangsgröße direkt verwendet wird, bei der Messung der Winkelgeschwindigkeit berücksichtigt werden. Die Hauptursache für diese Temperaturabhängigkeit liegt bei diesem Beispiel an den Temperaturabhängigkeiten der elektrischen Leitfähigkeit des Materials des empfindlichen Elements (Rotor 4) und des Magnetfelds. Durch die Verwendung geeigneter Materialien und/oder spezieller Konstruktionen kann diese Abhängigkeit kompensiert werden. Beispielsweise können für die Permanentmagnete 2 bestimmte Kobalt-Samarium-Legierungen in Kombination mit einer bestimmten Auswahl des Weicheisenmaterials für den magnetischen Kreis und Konstantan als elektrisch leitfähiges Material für das Meßelement verwendet werden.

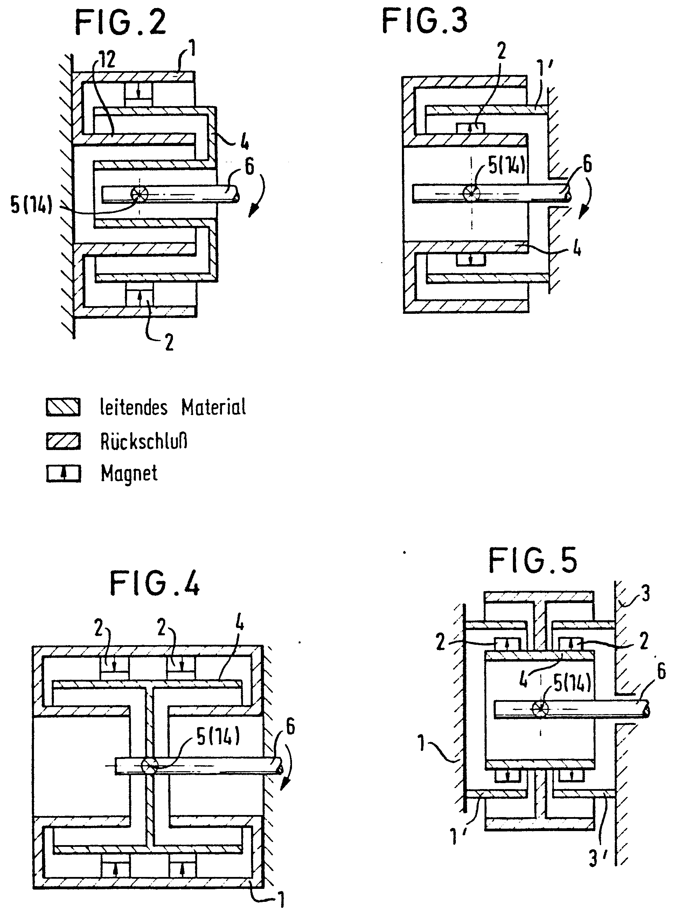

Die Fig. 2 bis 7 zeigen verschiedene Ausführungsmöglichkeiten für die erfindungsgemäß vorgesehene Dämpfung, hier dargestellt jeweils am Beispiel einer elektromagnetischen Dämpfung.

Beim Ausführungsbeispiel der Fig. 2 ist - ähnlich wie bei Fig. 1 - das Meßelement ebenfalls der über das Federgelenk 5 mit der Welle 6 verbundene, in diesem Fall ringtopfförmig gestaltete Rotor 4. In diesem Fall ist nur ein,

0169934

an der Innenwand des Außenteils der Haube 1 in Ausrichtung auf den virtuellen Aufhängepunkt des Federgelenks 5 angeordneter ringförmiger Permanentmagnet vorgesehen. Der Verlauf des Magnetfelds in radialer Richtung kann entweder ein homogenes radiales Feld sein oder ein wechselndes radiales Feld beliebiger Polzahl.

Die drei unter der Zeichnung der Fig. 2 angegebenen Kästchen deuten durch unterschiedliche Schraffierung an, welches Teil aus elektrisch leitfähigem Material besteht und über welche Teile der magnetische Rückschluß erfolgt. Diese Ergänzungszeichnung zur Fig. 2 gilt auch für alle weiteren Fig. 3 bis 7.

Die Fig. 3 zeigt ein Beispiel, bei der das mit der Welle 6 über das Federgelenk 5 verbundene Meßelement den magnetischen Kreis darstellt und den in diesem Fall mitumlaufenden ringförmigen Permanentmagneten 2 trägt. Der elektrische Wirbelstrom-Dämpfungskreis ist durch einen gehäusefesten Ansatz 1' veranschaulicht, der beispielsweise Teil der Haube 1 oder Teil des Gehäuses 3 sein kann.

Die Gestaltung des Dämpfungselements gemäß Fig. 4 entspricht im wesentlichen der Ausführungsform nach Fig. 1, jedoch mit dem Unterschied, daß die Permanentmagneten 2 jetzt an der inneren Außenwand der Haube 1 befestigt sind.

Bei der Lösung nach Fig. 5 ist das mit der Welle 6 über das Federgelenk 5 verbundene Meßelement wiederum Teil des magnetischen Kreises. Ein ring-topfförmiges Element aus weichmagnetischem Material trägt in symmetrischer Anordnung zur Vertikalebene durch den virtuellen Aufhängepunkt 14 zwei Permanentmagnete 2. Der elektrische Kreis besteht im wesentlichen aus einem Ansatz 1' an der Haube 1 bzw. einem Ansatz 3' am Gehäuse 3.

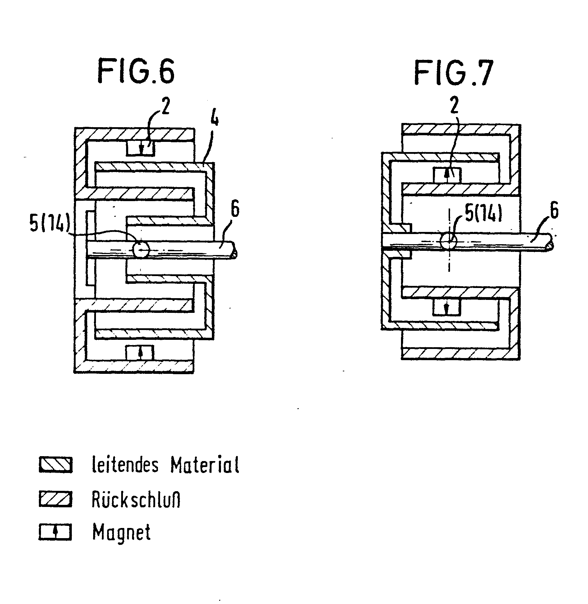

Die Lösung gemäß Fig. 6 entspricht im wesentlichen der der Fig. 2, jedoch mit dem Unterschied, daß das topfartige Element des magnetischen Kreises nicht mit dem Gehäuse 3 bzw. der Haube 1 starr verbunden ist.

Die Lösung nach Fig. 7 entspricht in etwa der nach Fig. 3, jedoch ebenfalls mit dem Unterschied, daß der elektrische Wirbelstrom-Dämpfungskreis nicht starr mit dem Gehäuse 3 bzw. der Haube 1 verbunden ist.

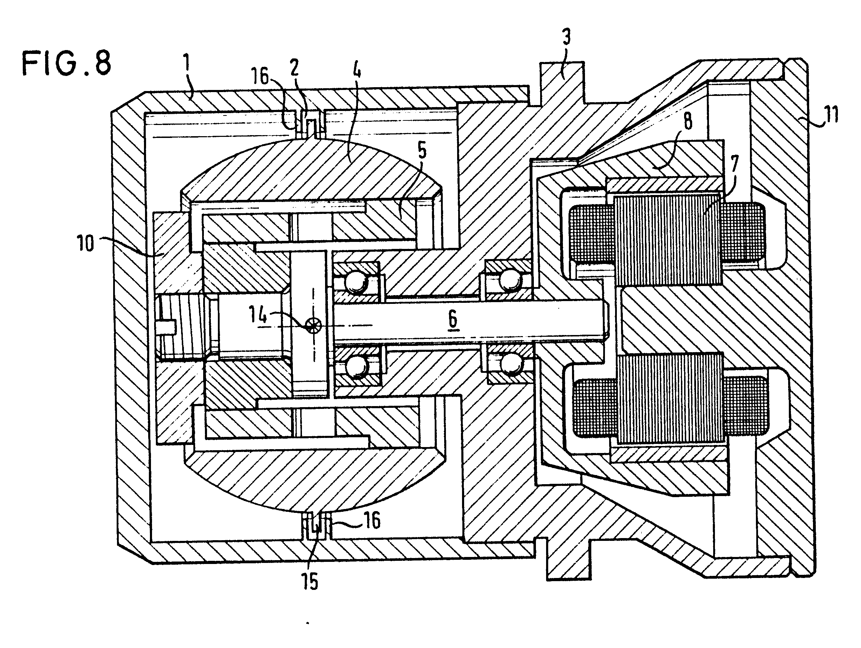

Die Fig. 8 verdeutlicht eine andere Ausführungsmöglichkeit für die erfindungsgemäß vorzusehende Dämpfung eines trockenen Wendekreisels. Die Welle 6 ist über das Federgelenk 5 mit im dargestellten Beispiel annähernd kugelförmig gestaltetem Rotor 4 als Meßelement verbunden. Der Rotor 4 weist in Vertikalebenenausrichtung zur Welle 6 einen außen flanschartig abstehenden Ringansatz 15 auf, der in einer durch zwei ringförmig umlaufende Ansätze 16 gebildeten Dämpfungsnut umläuft. Bei einer Drehrate wird sich beim Verkippen des Meßelements 4 der Spalt zwischen dem Ring-Flansch-Ansatz 15 und einer Wand der durch die Ringansätze 16 gebildeten Nut verengen, so daß eine deutliche Verringerung des Luft-Strömungsquerschnitts mit entsprechender Erhöhung der Dämpfung auftritt. Zur Einstellung der Dämpfung, aber auch aus anderen Gründen (z. B. Korrosionsschutz) kann es zweckmäßig sein, den Raum innerhalb der Haube 1 mit einem anderen Gas zu füllen.

0169934

PATENTANSPRÜCHE

1. Vorrichtung zur Drehratenmessung, g e k e n n - z e i c h n e t    d u r c h    einen trockenen torquer-losen Kreisel mit erhöhter Dämpfung (1, 2, 4), die einen mit der Rotorachse (6) verbundenen, um zwei Meßachsen beweglichen Rotor (4) aufweist, dessen Neigung als direktes Maß für die Drehrate auslesbar ist.

2. Vorrichtung nach Anspruch 1, d a d u r c h g e k e n n z e i c h n e t , daß die Dämpfung eine elektromagnetische Wirbelstromdämpfung ist, bestehend aus einem Magnetkreis mit wenigstens einem Permanentmagneten mit Rückschluß und einem Teil aus elektrisch leitendem Material als Dämpfungselement.

3. Vorrichtung nach Anspruch 2, d a d u r c h g e k e n n z e i c h n e t ,   daß der Rotor (4) das Dämpfungselement ist und der Magnetkreis starr mit dem Kreiselgehäuse verbunden ist.

4. Vorrichtung nach Anspruch 2, d a d u r c h g e k e n n z e i c h n e t ,   daß der Rotor (4) der Magnetkreis ist und das Dämpfungselement starr mit dem Kreiselgehäuse verbunden ist.

5. Vorrichtung nach Anspruch 2, d a d u r c h g e k e n n z e i c h n e t ,   daß der Rotor (4) das Dämpfungselement und der Magnetkreis starr mit der Welle (6) verbunden ist.

6. Vorrichtung nach Anspruch 2, d a d u r c h g e k e n n z e i c h n e t ,   daß der Rotor (4) der Magnetkreis ist und das Dämpfungselement starr mit der Welle (6) verbunden ist.

7. Vorrichtung nach den Ansprüchen 3 bis 6,
   d a d u r c h   g e k e n n z e i c h n e t , daß
   Magnetkreis und Dämpfungselement symmetrisch zu einer
   Ebene angeordnet sind,die durch den Federaufhängepunkt
   senkrecht zur Welle (6) steht, so daß die Wärmeausdehnungen vom Rotor keine Schwerpunktsverschiebungen
   und damit keine Driften erzeugt.

8. Vorrichtung nach einem der Ansprüche 3 bis 6,
   d a d u r c h   g e k e n n z e i c h n e t , daß
   der magnetische Kreis eine Mehrzahl von abwechselnd
   ungleichnamigen, gleichabständig um den Umfang einer
   Wandung eines magnetischen Topfs ringförmig angeordneten Permanentmagnetpolelementen aufweist.

9. Vorrichtung nach Anspruch 3,   d a d u r c h
   g e k e n n z e i c h n e t ,   daß der ringförmige
   Permanentmagnet ein in radialer Richtung im wesentlichen homogenes Magnetfeld erzeugt.

10. Vorrichtung nach einem der vorstehenden Ansprüche,
    d a d u r c h   g e k e n n z e i c h n e t , daß
    durch geeignete Materialauswahl für den magnetischen
    Kreis einerseits und für den Wirbelstrom-Dämpfungskreis
    andererseits eine wenigstens teilweise Kompensation
    der Temperaturabhängigkeit der Meßgröße gewährleistet
    ist.

11. Vorrichtung nach Anspruch 1,   d a d u r c h
    g e k e n n z e i c h n e t ,   daß die Dämpfung eine
    Fluiddämpfung ist, bei der der mit der Rotorachse (6)
    verbundene Rotor (4) als Dämpfungselement bei einer
    Drehung durch Verengung einer Fluidströmungsstrecke
    (Gas oder Flüssigkeit) mit einer zusätzlichen Dämpfung
    beaufschlagbar ist.

FIG.1

FIG.2

FIG.3

leitendes Material

Rückschluß

Magnet

FIG.4

FIG.5

## FIG.6

2   4

5(14)   6

## FIG.7

2

5(14)   6

◨◨ leitendes Material

▨▨ Rückschluß

◻▣ Magnet

4/4

FIG.8

Europäisches
Patentamt

**EUROPÄISCHER RECHERCHENBERICHT**

0169934
Nummer der Anmeldung

EP 84 11 2461

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| X | DE-A-2 627 852 (ANSCHÜTZ & CO.)<br><br>* Seite 5, Zeile 17 - Seite 6, Zeile 2; Seite 7, Zeile 16 - Seite 8, Zeile 2; Seite 19, Zeilen 11-26; Figuren 1,1a,1b,1c * | 1-3,7, 9 | G 01 P 9/02<br>G 01 C 19/04<br>G 01 C 19/42 |
| A | | 11 | |
| A | GB-A-1 152 586 (S.G. BROWN LTD.)<br>* Seite 1, Zeilen 19-44; Figuren 1-3 * | 1-3,7 | |
| A | FR-A-2 059 783 (SPERRY RAND CORP.)<br>* Seite 6, Zeilen 14-16; Seite 7, Zeilen 27-34; Figuren 1,6 * | 4,6 | |

RECHERCHIERTE SACHGEBIETE (Int. Cl 4)

G 01 P
G 01 C

Der vorliegende Recherchenbericht wurde für alle Patentansprüche erstellt.

| Recherchenort | Abschlußdatum der Recherche | Prüfer |
|---|---|---|
| DEN HAAG | 15-10-1985 | HANSEN P. |